# EUROPEAN PATENT APPLICATION

(11) **EP 4 851 956 A1**
(43) Date of publication of application: **09.12.2026**
(21) Application number: 25305805.1
(22) Date of filing: 03.06.2025
(51) Int. Cl.: G06V 20/69

(54) **PREDICTING A RATE OF CELLULAR DIFFERENTIATION**

(71) Applicant: Dassault Systèmes, 78140 Vélizy-Villacoublay (FR)
(72) Inventor: RAGOZINA, Yana, 06410 Biot (FR); BENEDITO, Cécilia, 06410 Biot (FR); GUYOT, Laura, 06410 Biot (FR)
(74) Representative: Bandpay & Greuter

(57) **Abstract**

The disclosure relates to a computer-implemented method for training a neural network to predict a rate of cellular differentiation in a cellular population at the end of a cellular differentiation process. The method comprises obtaining a training dataset comprising training examples. Each training example comprises a temporal series of images representing an evolution of the cellular population. Each temporal series is associated with a ground truth value of the rate. Each image is segmented in at least one colony and is associated to morphological properties of the at least one colony extracted from the segmented image. The training method comprises training the neural network based on the training dataset. The neural network is trained to, for each training example, compute predictions of a value of the rate. Each prediction corresponds to a respective timepoint of the evolution and is computed based on images of the temporal series till the timepoint.

## Description

### TECHNICAL FIELD

The disclosure relates to the field of computer programs and systems, and more specifically to methods, data structures, computer readable storage mediums, and systems related to predicting a rate of cellular differentiation in a cellular population.

### BACKGROUND

The human body contains over two hundred different types of specialized cells. Each type of specialized cell has a unique structure and function that contributes to the body's overall health and functionality. Examples of types of specialized cells comprise red blood cells (erythrocytes), white blood cell (leukocytes), neurons, muscle cells (myocytes), epithelial cells.

Cellular therapy, also known as cell therapy or cytotherapy, involves the transplantation of human cells to replace specialized cells and/or repair damaged tissues. Cellular therapy is thus directed to treating a variety of diseases and conditions. A challenge for this type of therapy is to obtain a sufficient number of specialized cells (e.g., a billion of epithelial cells), mainly because specialized cells have a limited ability to multiply. For this reason, cellular therapy makes use of stem cells.

Stem cells are a remarkable type of cells with (i) the ability to continuously divide to generate exact copies of themselves in a process known as self-renewal, and (ii) the ability to develop into different types of specialized cells in a process known as differentiation. Thus, cellular therapy requires the production of specialized cells through the application of a process of cellular differentiation applied to stem cells. Stem cells have a certain degree of potency or potential to differentiate. For example, a totipotent stem cell can develop into any type of cell, a pluripotent stem cell can develop into almost any type of cell, and a multipotent stem cell can develop into a limited range of cell types related to a specific tissue or organ.

The process of cellular differentiation is a process by which a less specialized cell (i.e., with a certain degree of potency) becomes a more specialized cell type. During the process of cellular differentiation, the differentiating cell alters dramatically its properties such as its shape, its size and its energy requirements. The process of cellular differentiation is influenced by genetic factors, environmental factors and cellular context. In particular, environmental factors comprise chemical signals (e.g., molecules like hormones, cytokines and growth factors can influence differentiation) and physical factors (e.g., mechanical forces and extracellular matrix can affect the differentiation pathway). The process of cellular differentiation is a dynamic process that usually takes place in the living systems, during the development and throughout life, depending on cell type. Biologists are able to reproduce this process *in-vitro* by mimicking the necessary environment for the proliferation and the differentiation of stem cells. The *in-vitro* cell culture takes place in laboratory in petri dishes, wells or flasks. More recently, bioreactors, that provides a controlled environment, are used for the growth and maintenance of the differentiating cells.

Within this context, there is still a need for an improved solution for predicting a rate of cellular differentiation in a cellular population.

### SUMMARY

It is therefore provided a computer-implemented method for training a neural network to predict a rate of cellular differentiation in a cellular population at the end of a cellular differentiation process. Hereinafter, this computer-implemented method for training a neural network is referred to as the "training method".

The training method comprises obtaining a training dataset comprising training examples. Each training example comprises a temporal series of images representing an evolution of the cellular population. Each temporal series is associated with a ground truth value of the rate. Each image is segmented in at least one colony comprising at least one colony of differentiated cells. Each image is associated to morphological properties of the at least one colony extracted from the segmented image.

The training method comprises training the neural network based on the training dataset. The neural network is trained to, for each training example, compute predictions of a value of the rate. Each prediction corresponds to a respective timepoint of the evolution and is computed based on images of the temporal series till the timepoint.

The training method may comprise one or more of the following:
- each temporal series represents an evolution of the cellular population in a respective experimental condition, each image of the series being associated with data describing the experimental condition;
- the method further comprises, before the training, generating, from the training dataset, a data structure comprising, for each respective experimental condition, a temporal data sequence comprising, for each timepoint of a predetermined set of timepoints, values of the morphological properties for the timepoint, the training being based on the data structure;
- the method further comprises reducing, in the data structure, a dimension of the values of the morphological properties, optionally by performing a Principal Component Analysis (PCA) technique;
- the method further comprises homogenizing data in the data structure;
- the neural network is a recurrent neural network, optionally the recurrent neural network being a Long Short-Term Memory (LSTM) network;
- the neural network is trained by penalizing, for each temporal series, and for each timepoint of the evolution represented by the temporal series, a dissimilarity between the computed prediction of the value of the rate at the timepoint and the associated ground truth value of the rate of the temporal series; and/or
- the morphological properties of the at least one colony comprise one or any combination of the following: area, perimeter, centroid, circularity, bounding box, equivalent diameter, convex area, solidity, Euler number, nearest neighbor centroid-centroid, nearest neighbor boundary-boundary, extent, and/or smallest bounding rectangle orientation.

It is further provided a neural network trainable according to the training method, that is, a neural network having values of weights and parameters set by the training method. The provided neural network may for example have been trained directly by the training method, with its weights and parameters having been fixed by the training step of the training method.

It is further provided a computer-implemented method of use of the neural network having been trained according to the training method. The method of use comprises obtaining a temporal series of images representing an evolution of a cellular population in a cellular differentiation process. The method of use comprises preprocessing the obtained temporal series of images, to segment the images into at least one colony comprising at least one colony of differentiated cells, and to obtain, for each image, associated morphological properties of the at least one colony extracted from the segmented image. The method of use comprises applying the neural network to the preprocessed obtained temporal series, to compute at least one prediction of a value of a rate of cellular differentiation in the cellular population at the end of the cellular differentiation process.

The method of use may comprise one or more of the following:
- the preprocessing comprises:
   ∘ applying a filter to each image of the obtained temporal series of images; and
   ∘ segmenting the filtered image in at least one colony comprising at least one colony of differentiated cells; and/or
- the method further comprises generating, from the segmented images, a data structure comprising a temporal data sequence comprising, for each timepoint of a predetermined set of timepoints corresponding to the obtained temporal series, values of the morphological properties for the timepoint, the neural network taking as input the data structure.

It is further provided a computer program comprising instructions which, when executed by a computer system, cause the computer system to perform the training method and/or the method of use.

It is further provided a data structure including: (i) the computer program, and/or (ii) a neural network trainable as discussed above.

It is further provided a computer readable storage medium having recorded thereon the data structure and/or the computer program and/or the neural network.

It is further provided a system comprising a processor coupled to a memory, the memory having recorded thereon the data structure and/or the computer program and/or the neural network.

It is further provided a device comprising a data storage medium having recorded thereon the computer program and/or the neural network and/or the data structure.

The device may form or serve as a non-transitory computer-readable medium, for example on a SaaS (Software as a service) or other server, or a cloud based platform, or the like. The device may alternatively comprise a processor coupled to the data storage medium. The device may thus form a computer system in whole or in part (e.g. the device is a subsystem of the overall system). The system may further comprise a graphical user interface coupled to the processor.

### BRIEF DESCRIPTION OF THE DRAWINGS

Non-limiting examples will now be described in reference to the accompanying drawings, where:
- FIG. 1a shows a flowchart of an example of the method for training a neural network;
- FIG. 1b shows a flowchart of an example of the method of use of a neural network having been trained according to the method for training a neural network;
- FIG.s 2 to 11 illustrate the methods; and
- FIG. 12 shows an example of the system.

### DETAILED DESCRIPTION

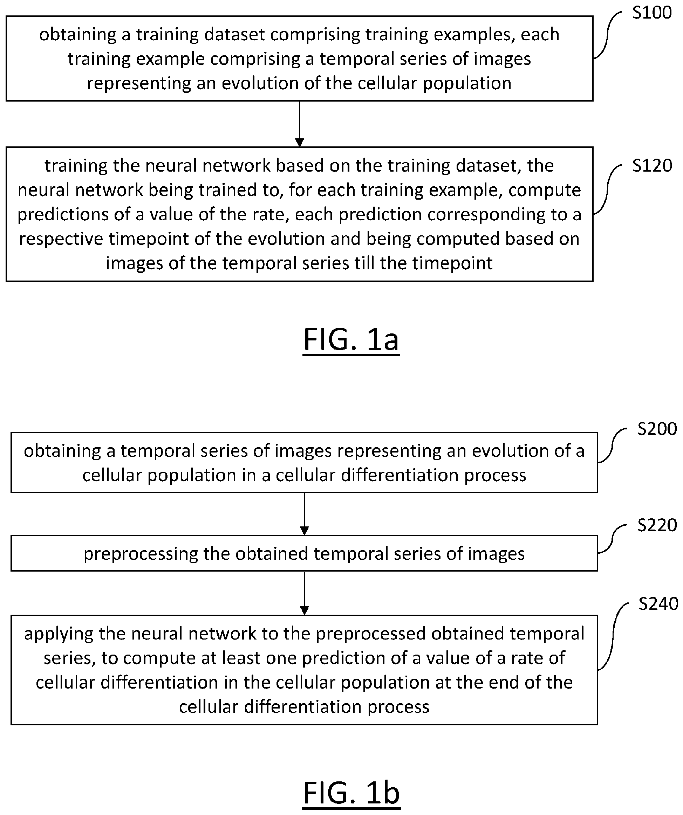

With reference to the flowchart of FIG. 1a, it is provided a computer-implemented method for training a neural network to predict a rate of cellular differentiation in a cellular population at the end of a cellular differentiation process. Hereinafter, this computer-implemented method for training a neural network is referred to as the "training method".

The training method comprises obtaining S100 a training dataset comprising training examples. Each training example comprises a temporal series of images representing an evolution of the cellular population. Each temporal series is associated with a ground truth value of the rate. Each image is segmented in at least one colony comprising at least one colony of differentiated cells. Each image is associated to morphological properties of the at least one colony extracted from the segmented image.

The training method comprises training S120 the neural network based on the training dataset. The neural network is trained to, for each training example, compute predictions of a value of the rate. Each prediction corresponds to a respective timepoint of the evolution and is computed based on images of the temporal series till the timepoint.

Such a training method forms an improved solution for predicting a rate of cellular differentiation in a cellular population at the end of a cellular differentiation process.

Notably, the training method amounts to training a neural network (e.g., apply machine learning techniques to a neural network, e.g., teaching a neural network with machine learning methods) capable of (i) processing a temporal series of images (i.e., a temporal data comprising images) representing an evolution of a cellular population comprising at least one colony as well as an evolution of morphological properties of the at least one colony, and capable of (ii) predicting a rate of cellular differentiation of the at least one colony of differentiated cells at specific timepoints of the evolution (e.g., at early timepoints, at intermediate timepoints, and/or at the end of) of the cellular differentiation process. Specifically, the prediction of the rate is always a prediction of the final differentiation rate, i.e., of the rate at the end of the cellular differentiation process. However, the neural network is configured to predict this rate at any time point of the temporal series taken as input, i.e., the neural network can compute predictions of the values of this rate for any image and associated timepoint of the series, using the images till that timepoint. Thus, the final differentiation rate can be predicted even using a partial temporal series representing only a part of the differentiation process. As discussed hereinafter, this allows performing physical actions during the differentiation process (e.g., modifying parameters of the protocol) using the predicted final rate based on microscope images of only an early stage of that process, for example to improve or attempt to improve the differentiation rate.

In addition, the training method, in processing a temporal series of images, amounts to training an efficient neural network that has the capability of identifying (e.g., without substantially no annotations or with a minimum amount of annotations) the evolution of dense and complex morphological properties of the at least one colony.

Moreover, the training method, in predicting a rate of cellular differentiation, provides a (e.g., continuous, real) value of the rate. In other words, the training method amounts to a regression task, in full contrast with existing solutions in the prior art that provides a binary value of the rate, i.e., amount to a classification task.

Furthermore, the training method is data-driven, i.e., the training S120 is solely based on the training dataset. As such, the training method amounts to a machine-learning image-processing neural network having the ability to process a temporal series of images (i.e., a temporal data) regardless of the level of homogeneity (e.g., regularity) of the temporal series of images representing the evolution of the cellular population. Otherwise said, the training method overcomes the challenge of using algorithms for improving the processing of temporal sequences with irregular temporal data, which are known to require (e.g., generate) a significant amount of temporal homogeneous (e.g., regular) training data and, therefore, a significant use of computational and memory resources during the training.

Additionally, the training method amounts to a weakly-supervised approach. This means that, contrary to existing solutions in the prior art, the training dataset does not require additional (e.g., automatic and/or manual) data annotations, such as annotations comprising immunofluorescence data that allows detecting and localizing a wide variety of target biomolecules with a cell and/or a tissue. Only ground truth values of the rate of the various training examples of temporal series are needed to teach the neural network to predict correct rates.

The temporal series of images in each training example of the training dataset obtained at S100 may be images taken by a microscope of the real-world, e.g., the image may represent a cellular population being inside any suitable cell culture system (e.g., a laboratory flask or a bioreactor) at specific timepoint during a certain experimental protocol. The training dataset may comprise thousands (e.g., at least 2500, e.g., between 2500 and 3500 microscope images) of real-world microscope images. Each image of the temporal series of images may be a real-world microscope image of a real-world process of cellular differentiation which has been taken in a laboratory flask or in a bioreactor in a specific experimental condition. Any real-world microscope image herein is obtained from physically operating a real-world microscope. As previously outlined, the images in the training dataset may comprise only real-word microscope images, obtained by real-world microscopes. The ground truth value of the rate may be the real-world value (e.g., a percentage value) of the rate of cellular differentiation observed at the end of said process. Such ground truth value may be obtained by any suitable measurement method known in the field of cellular biology. The rate of differentiation at the end of the differentiation process may be defined as the percentage of fully differentiated cells in all the cellular population at the end time of the process. The ground truth values may thus correspond to observed/measured such percentages in real world differentiation processes.

The training dataset may be stored in the memory as a data structure (e.g., a table), wherein data representing each image of the temporal series of images may be associated with the respective segmentation masks each representing the at least one colony in the image. The segmentation allows locating objects (e.g., the at least one colony) on the image. In examples, each image may be segmented in at least two colonies comprising a first colony of differentiated cells and a second colony of non-differentiated cells. For each colony of the at least two colonies, a predetermined set of numerical values may represent the morphological properties of the colony. The training of the neural network may be based on this data structure.

The evolution of the cellular population may comprise a set of timepoints, each timepoint bookmarking a moment (e.g., an instant) of the evolution of the cellular population. The set of timepoints may be regular, i.e., the time elapsed between the each two consecutive timepoints may be constant. Alternatively, the set of timepoint may be irregular, i.e., the time elapsed between the each two consecutive timepoints may be different. Each image of the temporal series of images may be associated to a respective timepoint of the set of timepoints. In other words, the temporal series of images may follow a temporal distribution of the set of timepoints. For example, the set of timepoints may form a number of days, e.g., 7 days, each timepoint being a day in the number of days, each temporal series being in this case a series of images each correspond to a respective day. This period of days (e.g., 7) may correspond to a period of a complete cellular differentiation (i.e., from only stem cells at day 1 to finished differentiation at day 7).

The predictions of a value of the rate may comprise predictions of a continuous value of the rate, e.g., a percentage value of the rate being between 0 and 1.

It is thereby also provided a neural network trainable according to the training method, optionally in combination with any one of the below-discussed optional features of the training method.

Such a neural network forms an improved solution of neural network for predicting a rate of cellular differentiation in a cellular population at the end of a cellular differentiation process.

Notably, such a neural network (i.e., a trained function or model) has the capability of (i) identifying (e.g., without substantially no annotations or with a minimum amount of annotations) the evolution of dense and complex morphological properties of the at least one colony, and of (ii) computing predictions of a (e.g., at least one continuous, real) value of the rate, e.g., at least one percentage value of the rate of differentiation. The above-mentioned capability (i) contrasts with solutions in the prior art which require extensive annotation of the training dataset; the above-mentioned capability (ii) contrasts with solutions in the prior art which predict a binary value of the rate of differentiation.

The trained neural network (i.e., the trained function or model) is (e.g., permanently) stored on a computer readable storage medium so as it can be used by the method of use, that is presented afterwards in this disclosure.

The training (e.g., learning) of the neural network may comprise a method of machine-learning suitable for training the neural network (also called trained function, once it has been learnt through the training, or model). The training of the neural network comprises obtaining a training dataset and training the neural network based on the training dataset.

As known *per se* from the field of machine-learning, the processing of an input by a model includes applying operations to the input, the operations being defined by data including weight values or parameters. Learning a model through training (e.g., a neural network) thus includes determining values of the weights/parameters based on a dataset configured for such learning, such a dataset being possibly referred to as a learning dataset or a training dataset. For that, the dataset includes data pieces each forming a respective training sample or training example. The training samples/examples represent the diversity of the situations where the model is to be used after being learnt/trained. Any training dataset herein may comprise a number of training samples/examples higher than 1000, 5000, or 10000. In the context of the present disclosure, by "training a neural network based on the training dataset", it is meant that the dataset is a learning/training dataset of the neural network, based on which the values of the weights/parameters are set. In the present disclosure, the training dataset is the obtained dataset of training examples, on which the model is learnt/trained.

As known *per se* from the field of machine-learning, a neural network may be defined by its architecture, parameters, and hyperparameters. The architecture consists of layers, starting with the input layer whose neuron count may be determined by the dimensionality of the input data. This layer is followed by several hidden layers with a given number of neurons and activation functions. These layers and neurons define the network's depth and width, while the activation functions may introduce non-linearity into the model. The output layer may have as many neurons as the variables in the output data. The interconnections between these layers define the topology of the neural network. The parameters of the neural network are the learnable weights and biases, which are determined in the training process. In contrast, the hyperparameters are pre-defined settings that are not learned from the training data. These encompasses the number of hidden layers, neurons per layer and much more. To train a neural network, at least two settings may be defined. First, a loss function, which is a metric that measures the error between the training data and the model's prediction, such as the mean square error (MSE), the mean average error (MAE) or the class-weighted cross entropy loss. Second, an optimizer, which modifies the model's weights and biases during the training process to minimize the loss function. Each optimizer has its own set of hyperparameters.

The trained neural network can be used in a computer-implemented method of use for (e.g., consequentially, e.g., dynamically) computing at least one prediction of a value of a rate of cellular differentiation in a cellular population at the end of a cellular differentiation process.

With reference to FIG. 1b, it is therefore provided a computer-implemented method of use of the neural network. The method of use comprises obtaining S200 a temporal series of images representing an evolution of a cellular population in a cellular differentiation process. The method of use comprises preprocessing S220 the obtained temporal series of images, to segment the images into at least one colony comprising at least one colony of differentiated cells, and to obtain, for each image, associated morphological properties of the at least one colony extracted from the segmented image. The method of use comprises applying S240 the neural network to the preprocessed obtained temporal series, to compute at least one prediction of a value of a rate of cellular differentiation in the cellular population at the end of the cellular differentiation process.

Notably, the method of use amounts to an improved solution for (i) preprocessing the obtained temporal series of images and, based on the preprocessed obtained temporal series of images, (ii) computing at least one prediction of a value of a rate of cellular differentiation in a cellular population at the end of a cellular differentiation process.

Moreover, as the neural network has been trained with a weakly-supervised approach without substantially no annotations, the method of use is adapted for preprocessing input temporal series of images that have not been annotated earlier and/or contain heterogeneous (e.g., irregular) temporal sequences (e.g., contain missing temporal data on some days of the protocol of the differentiation process).

Furthermore, the method of use is thus capable of estimating (e.g., computing predictions of) at least one percentage rate of cellular differentiation in a cellular population at the end of a cellular differentiation process in any suitable cell culture system (e.g., the laboratory flask or in the bioreactor) observable by the end of the protocol of cellular differentiation.

Overall, the method of use takes into account a temporal evolution of the at least one observed cellular colony, based on the obtained temporal series of images as input (e.g., further based on the quantitative data relative to the experimental condition of the differentiation protocol conducted in the laboratory or bioreactor). This way, the method of use is capable to progressively process images observed on every temporal point of the differentiation protocol and predicts the rate of the at least one observed cellular colony. For example, the obtaining S200 of the temporal series may comprise obtaining the images of the series with a microscope device configured to observe the differentiation process, e.g. in a bioreactor, with for example one image per day (i.e., the timepoints are days), for example in a differentiation period of 7 days. The temporal series may cover only a part of the temporal period of the differentiation process (e.g., the first one, two, three, four, five, or six days of the process). The method of use, thanks to using the trained neural network, can output a prediction of the final differentiation rate for this series, i.e., it predicts the rate at the end of the process despite the differentiation process being not completed. This allows predicting the final differentiation rate based on images of the differentiation process being partially completed. This allows for example taking any suitable physical action(s) based on the prediction, for example to attempt to improve the rate, such as modifying one or more suitable parameters of the bioreactor and/or of the differentiation protocol (e.g., modifying the temperature in the bioreactor, or the like). The method of use may optionally comprise performing this or these physical action(s).

The training method and the method of use may be performed in a same computer-implemented process comprising the training method as offline state and the method of use as online stage. Alternatively, the two methods may be performed independently, e.g., on different computers.

The training method is now further discussed.

Each temporal series obtained at S100 may represent an evolution of the cellular population in a respective experimental condition. By "experimental condition", it is meant a defined experimental protocol of the cellular differentiation process. The experimental condition (i.e., the experimental protocol) may comprise a detail plan outlining instructions (e.g., a workflow or a pipeline) to be followed to ensure the cellular differentiation process is conducted systematically and reproducibly. The experimental protocol may have a predetermined temporal length (e.g., 7 days, 10 days, 14 days) being partitioned into predetermined timepoints (e.g., one timepoint per day). The temporal series of images may comprise a predetermined number of images for each predetermined timepoint of the predetermined temporal length of the protocol (e.g., 10 images for each day of the 7-day protocol). Each image of the temporal series may be associated with data describing the experimental condition. Data describing the experimental condition may comprise quantitative data (e.g., a set of numerical values) representing at least one among: growth factors, cytokines, chemical inducers, substrate, extra-cellular matrix composition, temperature, pH level, Oxygen level, cell seeding density, and the like.

The training method may further comprise, before the training S120, generating a data structure from the training dataset. The data structure may comprise, for each respective experimental condition, a temporal data sequence. The temporal data sequence may comprise, for each timepoint of a predetermined set of timepoints, values of the morphological properties for the timepoint. In other words, the training method may comprise reformatting (e.g., reorganizing) the training dataset so as to include data describing the experimental condition. The training S120 of the neural network may be based on the data structure, i.e., the reformatted data structure comprising data describing the experimental condition. The (e.g., reformatted) data structure may be specifically-adapted to be provided as input to the neural network, and may thus facilitate the training of the neural network and improving the accuracy of the neural network in predicting the rate of the cellular differentiation.

The training method may further comprise reducing, in the data structure, a dimension of the values of the morphological properties. Optionally, the reducing of the dimension of values of the morphological properties may be performed by a Principal Component Analysis (PCA) technique. The reducing may optimize the computation time, while preserving the accuracy of the neural network in predicting the rate of the cellular differentiation.

In examples, the training method may further comprise, before the reducing, firstly concatenating: (i) a vector representing the experimental condition, (ii) a vector representing the set of timepoints, and (iii) a vector representing the temporal series of images, and secondly concatenating: (i) a vector of values of the morphological properties and (ii) a vector of values of the at least one colony. The concatenating allows semantically concatenating the values of the morphological properties of the at least one colony with the same sample of images.

The training method may further comprise homogenizing data in the data structure. The homogenizing of data may comprise filling in missing values (e.g., filling in a null value, filling in randomly values of morphological properties, by mode imputation such as the k-nearest neighbors imputation) and/or removing values if they are not compliant with certain reliability conditions. This way the training method ensures consistency and improves the quality of the training dataset, and guarantees a robust training of the neural network.

The neural network may be a recurrent neural network. As known in the art, an RNN is a type of artificial neural network designed to process sequential data (e.g., temporal data) by maintaining a memory of previous inputs. This makes RNNs particularly effective for tasks where context and temporal dependencies are important, such as predicting a rate of cellular differentiation process from a temporal series of images representing an evolution of the process. At each time step, a hidden state of the RNN may be updated based on the current input and the previous hidden state, allowing the network to capture patterns and dependencies over time. Several classes of RNNs exist, like Long Short-Term Memory (LSTM) networks and Gated Recurrent Units (GRUs), that are designed to handle long-term dependencies more effectively by using gates to control the flow of information. Optionally, the recurrent neural network of the present disclosure may be an LSTM network.

The neural network of the present disclosure may be trained using a method called Backpropagation Through Time (BPTT), which involves unrolling the network through time and computing gradients for each time step. This training process may help the network learn to make accurate predictions based on sequential temporal data.

The neural network may be trained by penalizing, for each temporal series, and for each timepoint of the evolution represented by the temporal series, a dissimilarity between the computed prediction of the value of the rate at the timepoint and the associated ground truth value of the rate of the temporal series. The dissimilarity may be a Mean Absolute Error (MAE) between the computed prediction of the value of the rate at the timepoint and the associated ground truth value of the rate of the temporal series.

The morphological properties of the at least one colony comprise one or any combination of the following: area, perimeter, centroid, circularity, bounding box, equivalent diameter, convex area, solidity, Euler number, nearest neighbor centroid-centroid, nearest neighbor boundary-boundary, extent, and/or smallest bounding rectangle orientation.

The method of use of the trained neural network is now further discussed.

The preprocessing S220 may comprise applying a filter to each image of the obtained temporal series of images. The applying may comprise applying at least one filter to each image. The applying may comprise normalizing the filtered image. The applying may help highlighting textures of the image so as to better distinguish elements in the image from the background of the image. The preprocessing S220 may comprise segmenting the filtered image in at least one colony comprising at least one colony of differentiated cells. The segmenting of the filtered image may comprise applying any known dedicated algorithm of image segmentation to search for morphological properties and to create at least one group, corresponding to at least one cell colony and containing morphological properties having similar texture similarities (e.g., by comparing geometric features of the morphological properties, such as area, perimeter, centroid and the like).

The method of use may further comprise generating, from the segmented images, a data structure comprising a temporal data sequence. The temporal data sequence may comprise, for each timepoint of a predetermined set of timepoints corresponding to the obtained temporal series, values of the morphological properties for the timepoint. The neural network may take as input this data structure.

An example of implementations of the training method is now discussed.

This example of implementations of the training method amounts to a trained neural network (e.g., a machine-learnt model or algorithm) having been trained according to the training method described earlier. The so-trained neural network is capable of (i) visually tracking an evolution of a cellular population in a cellular differentiation process (e.g., visually tracking the morphological properties of differentiating cell cultures), and of (ii) predicting the final differentiation rate of the at least one cellular colony at different stages of the cellular differentiation process (e.g., at early stages, at intermediate stages and/or at the end of the cellular differentiation process).

More precisely, this example of implementations of the training method amounts to a machine-learnt image-processing algorithm (e.g., a live image tracking algorithm) that can be used in another example of implementation of the method of use described earlier in this disclosure, and aiming at:
- identifying at least one colony of the cellular population, the identifying comprising preprocessing (e.g., segmenting) images (e.g., representing a cellular population inside a laboratory flask or a bioreactor) from an obtained temporal series of images as input. This way, the training method is capable of distinguishing the at least one colony of differentiated cells and visually tracking the evolution of the cellular population (e.g., visually tracking dense and complex morphological properties of differentiating cells). Moreover, as the neural network has been trained with a weakly-supervised approach without substantially no annotations, this example of implementations is adapted for preprocessing input temporal series of images that have not been annotated earlier and/or contain heterogeneous (e.g., irregular) temporal sequences (e.g., contain missing temporal data on some days of the protocol of the differentiation process).
- predicting the rate of the at least one cellular colony at different stages of the cellular differentiation process. The method of use is thus capable of estimating (e.g., computing predictions of) at least one percentage rate of cellular differentiation in a cellular population at the end of a cellular differentiation process in the laboratory flask or in the bioreactor observable.

In other words, this example of implementations of the training method takes into account a temporal evolution of the at least one observed cellular colony, based on the obtained temporal series of images as input (i.e., based on the quantitative data relative to the experimental condition of the differentiation protocol conducted in the laboratory). This way, this example of implementations of the training method is capable to progressively process images observed on every temporal point of the differentiation protocol and predicts the rate of the at least one observed cellular colony.

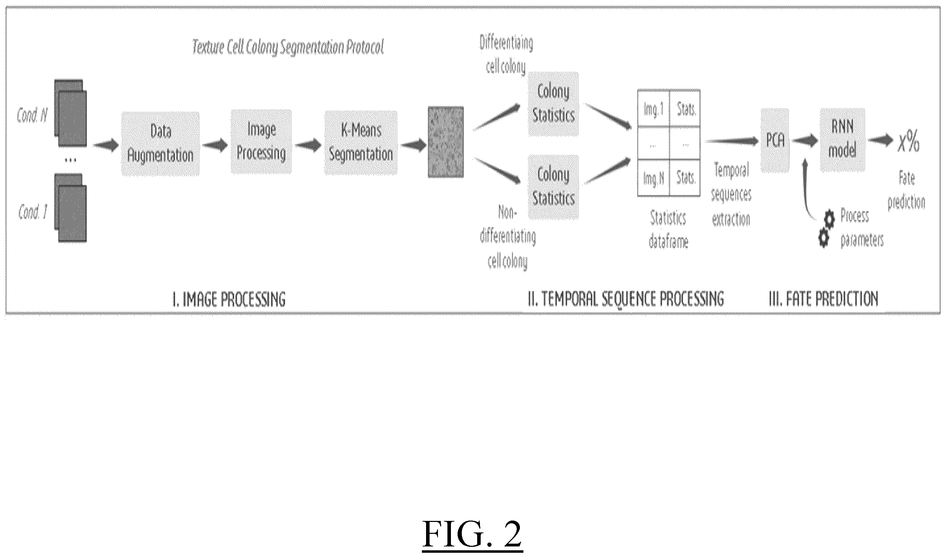

FIG. 2 shows an example of schematic pipeline (e.g., workflow) of an example of implementations of the training method. This example of pipeline is divided into three main parts: (i) image processing, aimed at extracting the morphological properties of each colony extracted from the segmented images; (ii) temporal sequence processing, aimed at capturing a temporal evolution of the extracted morphological properties; and (iii) predicting a rate of cellular differentiation based on the captured temporal evolution. This example of pipeline may be designed and built by using any known software for this purpose (e.g., BIOVIA Pipeline Pilot^{™}).

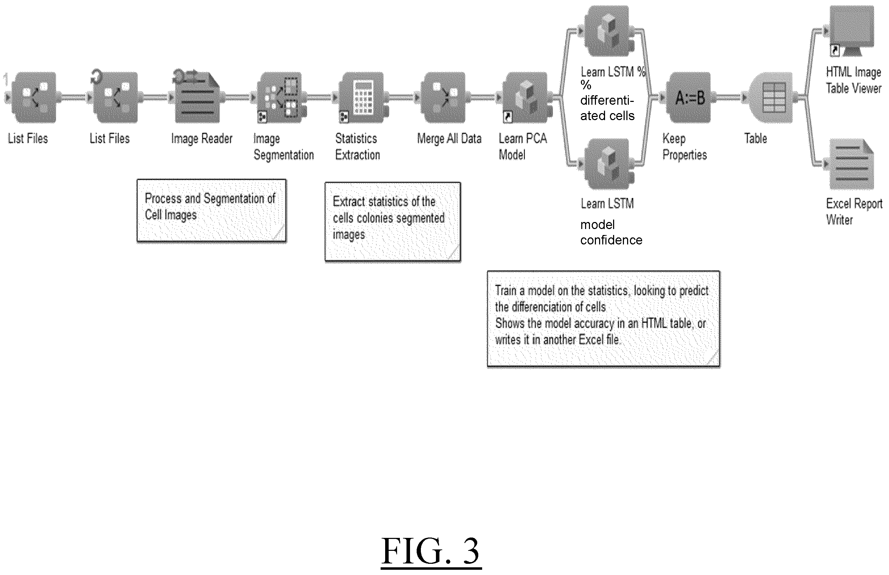

FIG. 3 shows a detailed pipeline of this example of implementations of the training method. The pipeline comprises code workflows containing components with different functionalities. Each component inside the code workflow may carry out a different functionality such as data processing, image and file reading, graph plotting as long as many different machine learning algorithms. These code workflows may be grouped in libraries containing components frequently used together. For instance, the libraries (i.e., components) "List Files" and "Image Reader" may, respectively, list and read the obtained images as input. The library "Image Segmentation" may include components capable to process and analyze biomedical images. It is also possible, if of any specific interest, to integrate the pipeline with specifically-adapted components written in any known programming language such as Python or R. This way, by using any known software for designing and building a pipeline such as BIOVIA Pipeline Pilot^{™}, the user only needs to conceptualize the sequence of precompiled components. Moreover, this framework offers many various predefined workflows allowing to accomplish different technical objectives.

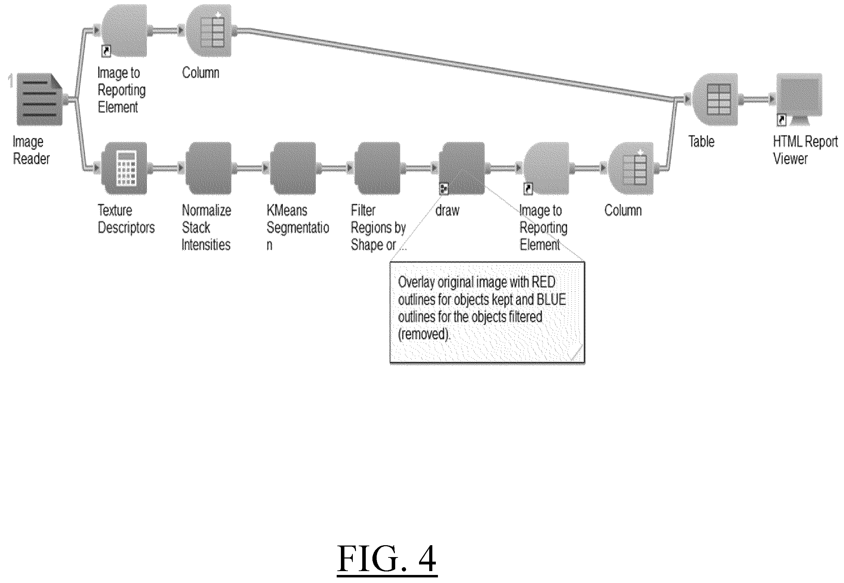

FIG. 4 shows an example of code workflow representing the component "Image Reader" included in the first part of the step "image processing".

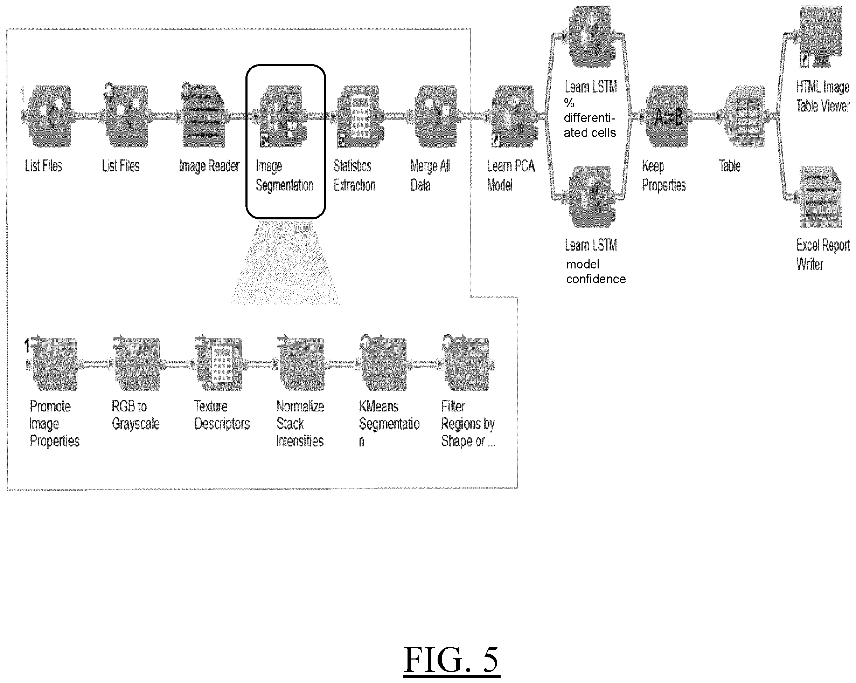

FIG. 5 shows an example of integration of the code workflow representing the component "Image Segmentation" included in the first part "image processing" of the pipeline. This example of integration shows that certain sub-components of the "Image Reader" component of FIG. 4, namely "Texture Descriptors", "Normalize Stack Intensities", "KMeans Segmentation", and "Filter Regions by Shape or Location", are moved to the component "Image Segmentation" and are preceded by two more components "Promote Image Properties" and "RGB to Greyscale". The component "Promote Image Properties" may convert the name of the obtained images as input as a property that may be further use later in the pipeline. The component "RGB to Greyscale" may convert the obtained images as input into greyscale images. The component "Texture Descriptors" may highlight the textures of an image by applying at least one filter, thus allowing to better distinguish objects from the background. In one example of implementations, "Texture Descriptors" may take as input an image, apply 8 different filters to the input image, and provide as output 8 filtered images. This way, "Texture Descriptors" allows treating differently the original input image.

Still with reference to FIG. 5, the component "KMean Segmentation" may apply the KMeans segmentation algorithm to the filtered (and normalized) images outputted by the component "Texture Descriptors", and referred to as the "texture descriptor images". For each of the texture descriptor images, "KMeans Segmentation" may search for texture similarities (e.g., morphological properties) and creates n groups (e.g., *n=2* groups or colonies of the cellular population) on the texture descriptor image, where every group contains the most similar texture (e.g., morphological properties). This way, "KMeans Segmentation" is able to segment elements on the texture descriptor images. In other words, "KMeans Segmentation" may assign the segmented elements to one of the n groups (e.g., *n=2* groups or colonies of the cellular population) depending on the intra-group similarity. In examples, the segmentation result may be "differentiating cells colony" and "non-differentiating cells colony". Finally, the component "Filter Regions by Shape or Location" may filter the segmented groups (e.g., colonies) based on their respective shape and/or location. The segmented groups may be labelled, e.g., in case the segmentation result is "differentiating cells colony" and "non-differentiating cells colony", the differentiated cells colony may be labelled with a fist color (e.g., red) and the non-differentiated cells colony may be labelled with a second color (e.g., blue), thus providing a visual representation of the two colonies of the cellular population.

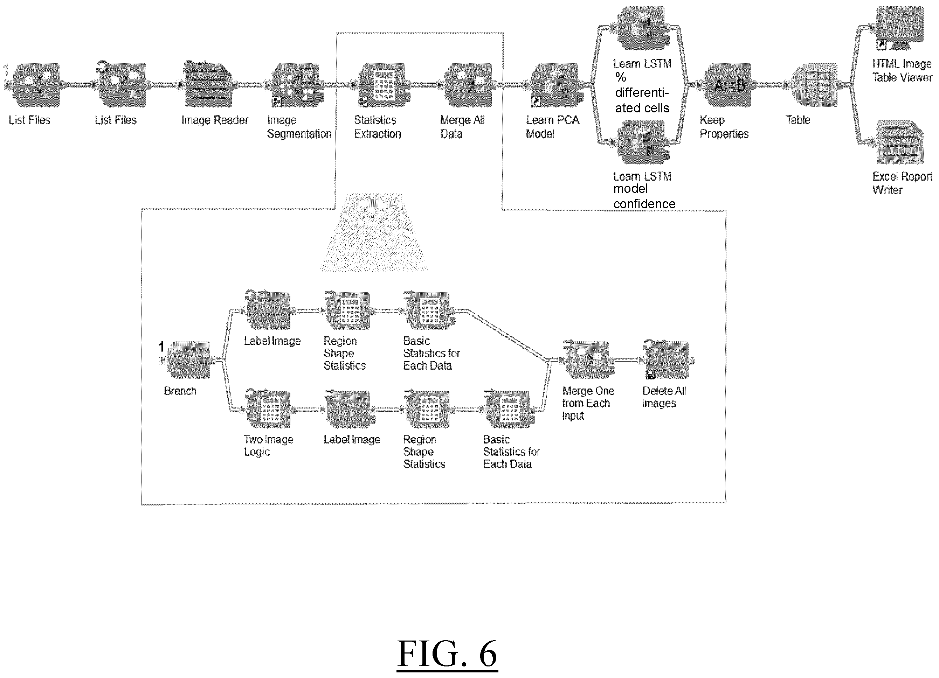

FIG. 6 shows an example of code workflow representing the component "Statistics Extraction" included in the second part "temporal sequence processing" of the pipeline. This component may extract (e.g., computing) statistics of the morphological properties associated with each colony (e.g., the differentiating cells colony and the non-differentiating cells colony) extracted from the segmented images. According to the workflow shown in FIG. 6, the segmented image may be duplicated and each replica may enter a parallel branch workflow comprising the component "Label Image", "Region Shape Statistics", and "Basic Statistic for Each Data". The component "Label Image" may assign data to (i.e., label) each replica with the respective extracted colony. For example, the first filtered segmentation colony (e.g., filtered by the component "Filter Regions by Shape or Location") having the biggest area threshold may be label on the first duplicated image. The second filtered segmentation colony having the smallest area may be first identified by the component "Two Image Logic" and then may be labelled on the second duplicated image. The component "Region Shape Statistics" may extract statistics of the morphological properties for both the first filtered segmentation colony and the second filtered segmentation colony. The morphological properties may comprise one or any combination of the following: area, perimeter, centroid, circularity, bounding box, equivalent diameter, convex area, solidity, Euler number, nearest neighbor centroid-centroid, nearest neighbor boundary-boundary, extent, and/or smallest bounding rectangle orientation. The component "Basic Statistic for Each Data" may compute additional statistics comprising a mean value, a standard deviation value, a maximum value, a minimum value of each of the morphological properties. In examples, for each input image, the extracted statistics values of the morphological properties may be 52, i.e., 26 extracted statistical values of the morphological properties for each filtered segmentation colony. The extracted statistical values of the morphological properties may help distinguishing between the differentiating cells colony and the non-differentiating cells colony. The component "Merge One from Each Input" may merge the extracted statistical values of the morphological properties of the at least one colony. Finally, the component "Delete All Images" may gather the merged extracted statistical values for all the images in the training dataset within a single initial data-frame (e.g., an initial data structure) and may delete the processed images. In examples, the initial data-frame may comprise, for each input image and for each of the at least one colony of the input image, a vector representing the extracted statistical values of the colony in the image. In other words, the initial data-frame may be represented by a table of dimension (*j, n,* 26), where *j* is the total number of input images, *n* is the number of colonies and 26 is the number of morphological properties per colony in the input image.

Next, before the training S120 (i.e., before the component "Learn LSTM percentage of differentiated cells"), the pipeline (i.e., the training method) may comprise generating, from the training dataset (e.g., from the single initial data-frame), a data structure comprising, for each respective experimental condition, a temporal data sequence comprising, for each timepoint of a predetermined set of timepoints, values of the morphological properties for the timepoint.

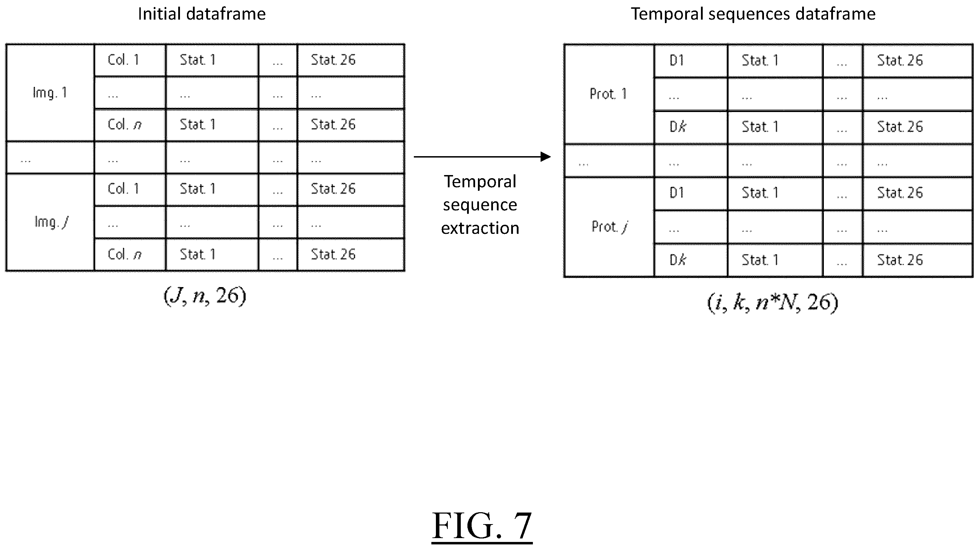

FIG. 7 shows an example of the initial data-frame and of the generated data structure from the training dataset, e.g., from the single initial data-frame obtained from the "Delete All Images" component as described earlier. Data stored in the initial data-frame may be reorganized by generating a data structure. The generated data structure may comprise, for each respective experimental condition denoted by *i,* each experimental condition lasting *k* days and having *N* images of the cellular colony per day, a temporal data sequence comprising, for each timepoint (e.g., for each day) of a predetermined set of timepoints (e.g., *k* days), values of the morphological properties for the timepoint. In case the number of morphological properties for each segmented colony is set to 26, the generated data structure may be represented by a table of dimension (*i, k, n*N, 26*). The training method may further comprise homogenizing data in the generated data structure. In other words, the training method may randomly duplicate missing values of the morphological properties and/or replace missing values by 0 when appropriate, i.e., compliant with the knowledge about the experimental condition. The pipeline (i.e., the training method) may further comprise reformatting the generated data structure so as to be specifically-adapted for the training of the neural network. In example, the first three dimensions of the table of dimension (*i, k, n*N, 26*) may be concatenated, i.e., the table of dimension (*i, k, n*N, 26*) may be mapped to a table of dimension (*i*k*N, n*26*)*.* In other words, this concatenation operation may allow concatenating semantically the values of the n colonies' morphological properties within the same data sample (i.e., *i*k*N* images) as a single set of morphological properties observed on images. Furthermore, the pipeline (i.e., the training method) may further comprise reducing, in the reformatted data structure, the dimension of the values of the morphological properties. To this aim, the component "Learn PCA Model" may reduce the dimension of values of the morphological properties, optionally by performing a PCA technique. In other words, this component may retrieve the most statistically significant combinations of values of the morphological properties. For example, as a result of performing the PCA, the table of dimension (*i*k*N, n*26*) may be reduced to (*i*k*N, 12*) or, equivalently to (*i, k, N*12).* The training of the neural network may be based on such a generated data structure. Additionally, or optionally, the pipeline (i.e., the training method) may further comprise adding additional quantitative data and/or additional labels (e.g., the labels of the "Label Image" component). The quantitative data may comprise a set of numerical values representing at least one among: growth factors, cytokines, chemical inducers, substrate, extra-cellular matrix composition, temperature, pH level, Oxygen level, and the like.

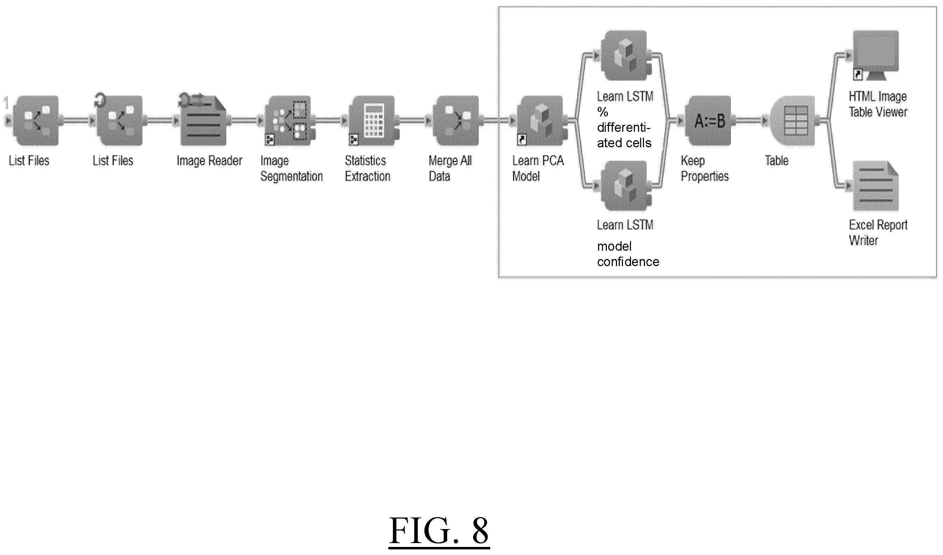

FIG. 8 shows an example of code workflow representing the third part "predicting a rate of cellular differentiation" of the pipeline. This third part of the pipeline may gather all the previously extracted morphological statistics and, based on the temporal evolution of the morphological properties of each cell colony (differentiating/non-differentiating, accordingly to the "KMeans Segmentation" component) and/or the data describing the respective experimental condition, may compute a percentage rate of differentiated cells observable on the final differentiation day of a respective experimental condition. The component "Learn LSTM percentage of differentiated cells" may take as input the generated data structure described earlier and provides as output predictions of a value of the rate of cellular differentiation, each prediction corresponding to a respective timepoint of the evolution, and being computed based on images of the temporal series till the timepoint. The LSTM-type model may process the temporal data sequence and, progressively, learn temporal patterns of data at very timepoint, thereby learning the temporal evolution of data representing the process of cellular differentiation. In example, the LSTM neural network may comprise dense layers in the neural network architecture and/or a batch normalization layer for improving the learning.

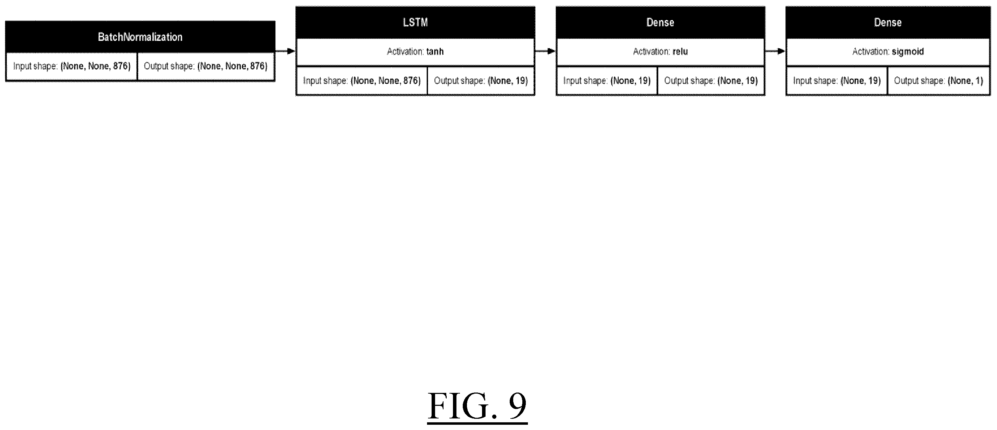

FIG. 9 shows an example of the architecture of the LSTM neural network. The choice of the LSTM neural network's parameters depends solely on the specificity of the data. For instance, for the training dataset obtained at S100, the numerical value 876 corresponds to the total number of morphological properties i.e., *i=19* experimental conditions * *N* images * 12 morphological properties to which it may be added the additional quantitative data representing the experimental conditions. The LSTM neural network predicts a single value of the rate of the cellular differentiation of the differentiated cells colony.

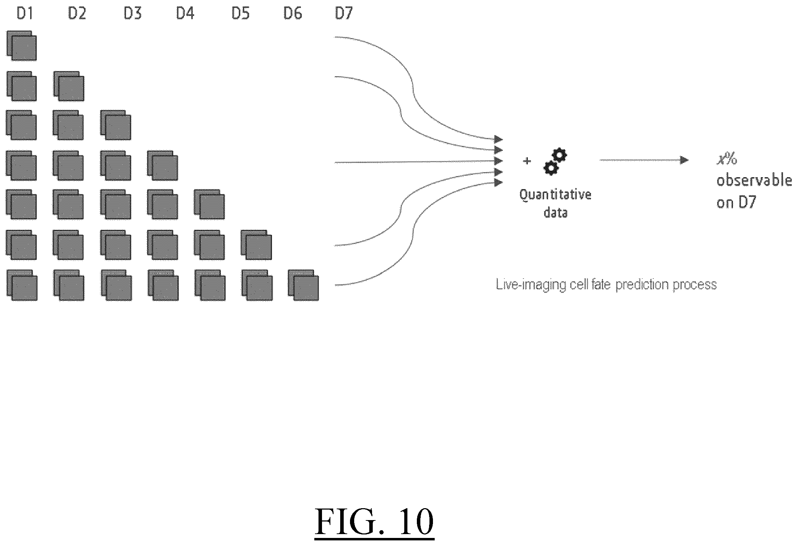

FIG. 10 shows an example of implementations of the method of use of a neural network trained according to the training method. In this example of implementation of the method of use, each day D1, D2, ..., D6, D7, the method of use comprises obtaining S200 a temporal series of images representing an evolution of a cellular population in a cellular differentiation process. The method comprises preprocessing S220 the obtained temporal series of images, to segment the images into at least one colony comprising a colony of differentiated cells, and to obtain, for each image, associated morphological properties of the at least one colony extracted from the segmented image. The method of use comprises applying S240 the neural network to the preprocessed obtained temporal series, to compute at least one prediction of a value of a rate of cellular differentiation in the cellular population at the end of the cellular differentiation process. The method of use may comprise applying S240 the neural network to the preprocessed obtained temporal series, to compute predictions (e.g., 7 predictions) of a value of the rate, each prediction corresponding to a respective timepoint (e.g., D1, D2, ..., D6, D7) of the evolution and being computed based on images of the temporal series till the timepoint.

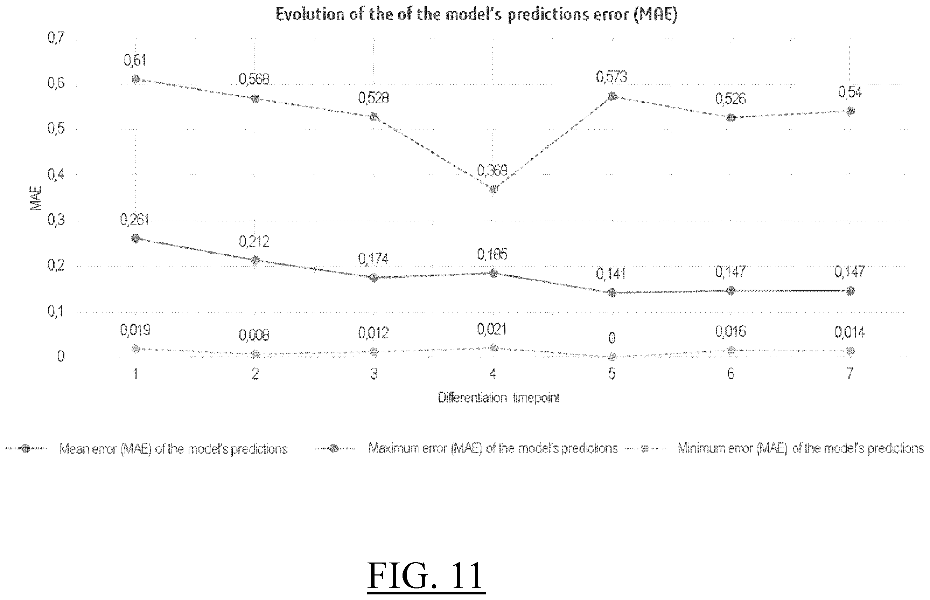

FIG. 11 shows a plot representing the evolution of the MAE between the computed prediction of the value of the rate at each timepoint and the associated ground truth value of the rate at same timepoint. The so-trained neural network shows an averaged MAE over the differentiation process of around 14%.

The training method and the method of use are computer-implemented. This means that steps (or substantially all the steps) of the methods are executed by at least one computer, or any system alike. Thus, steps of the methods are performed by the computer, possibly fully automatically, or, semi-automatically. In examples, the triggering of at least some of the steps of the methods may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

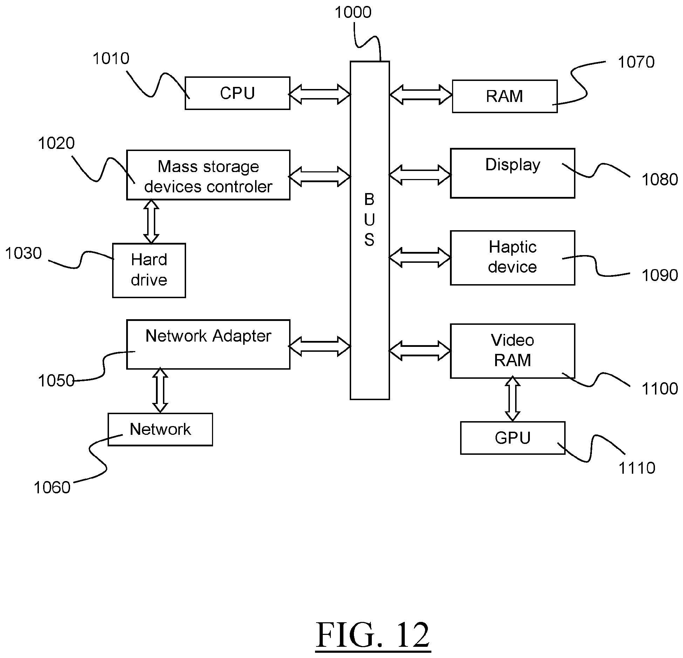

FIG. 12 shows an example of the system, wherein the system is a computer system, e.g., a workstation of a user.

The computer of the example comprises a central processing unit (CPU) 1010 connected to an internal communication BUS 1000, a random access memory (RAM) 1070 also connected to the BUS. The computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the computer system may comprise a sensitive pad, and/or a sensitive screen.

The computer program may comprise instructions executable by a computer, the instructions comprising means for causing the above system to perform the training method and/or the method of use. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Methods steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

## Claims

1. A computer-implemented method for training a neural network to predict a rate of cellular differentiation in a cellular population at the end of a cellular differentiation process, the method comprising:
- obtaining (S100) a training dataset comprising training examples, each training example comprising a temporal series of images representing an evolution of the cellular population, and each temporal series being associated with a ground truth value of the rate, each image being segmented in at least one colony comprising at least one colony of differentiated cells, and each image being associated to morphological properties of the at least one colony extracted from the segmented image;
- training (S120) the neural network based on the training dataset, the neural network being trained to, for each training example, compute predictions of a value of the rate, each prediction corresponding to a respective timepoint of the evolution and being computed based on images of the temporal series till the timepoint.

2. The computer-implemented method of claim 1, wherein each temporal series represents an evolution of the cellular population in a respective experimental condition, each image of the series being associated with data describing the experimental condition.

3. The computer-implemented method of claim 2, wherein the method further comprises, before the training, generating, from the training dataset, a data structure comprising, for each respective experimental condition, a temporal data sequence comprising, for each timepoint of a predetermined set of timepoints, values of the morphological properties for the timepoint, the training being based on the data structure.

4. The computer-implemented method of claim 3, wherein the method further comprises reducing, in the data structure, a dimension of the values of the morphological properties, optionally by performing a Principal Component Analysis (PCA) technique.

5. The computer-implemented method of claim 4, wherein the method further comprises homogenizing data in the data structure.

6. The computer-implemented method of any one of claims 1 to 5, wherein the neural network is a recurrent neural network, optionally the recurrent neural network being a Long Short-Term Memory (LSTM) network.

7. The computer-implemented method of any one of claims 1 to 6, wherein the neural network is trained by penalizing, for each temporal series, and for each timepoint of the evolution represented by the temporal series, a dissimilarity between the computed prediction of the value of the rate at the timepoint and the associated ground truth value of the rate of the temporal series.

8. The computer-implemented method of any one of claims 1 to 7, wherein the morphological properties of the at least one colony comprise one or any combination of the following: area, perimeter, centroid, circularity, bounding box, equivalent diameter, convex area, solidity, Euler number, nearest neighbor centroid-centroid, nearest neighbor boundary-boundary, extent, and/or smallest bounding rectangle orientation.

9. A neural network trainable according to the method of any one of claims 1 to 8.

10. A computer-implemented method of use of a neural network of claim 9, the method of use comprising:
- obtaining (S200) a temporal series of images representing an evolution of a cellular population in a cellular differentiation process;
- preprocessing (S220) the obtained temporal series of images, to segment the images into at least one colony comprising at least one colony of differentiated cells, and to obtain, for each image, associated morphological properties of the at least one colony extracted from the segmented image;
- applying (S240) the neural network to the preprocessed obtained temporal series, to compute at least one prediction of a value of a rate of cellular differentiation in the cellular population at the end of the cellular differentiation process.

11. The computer-implemented method of claim 10, wherein the preprocessing comprises:
- applying a filter to each image of the obtained temporal series of images; and
- segmenting the filtered image in at least one colony comprising at least one colony of differentiated cells.

12. The computer-implemented method of claim 11, wherein the method further comprises generating, from the segmented images, a data structure comprising a temporal data sequence comprising, for each timepoint of a predetermined set of timepoints corresponding to the obtained temporal series, values of the morphological properties for the timepoint, the neural network taking as input the data structure.

13. A computer program comprising instructions which, when the program is executed by a computer, cause the computer to perform the method of any one of claims 1 to 8 and/or the method of use of any one of claims 10 to 12.

14. A computer readable storage medium having recorded thereon a computer program of claim 13 and/or the neural network of claim 9.

15. A system comprising a processor coupled to a memory, the memory having recorded thereon the computer program of claim 13 and/or the neural network of claim 9.
